# EUROPEAN PATENT SPECIFICATION

(11) **EP 3 517 182 B1**
(45) Date of publication and mention of the grant of the patent: **17.02.2021**
(21) Application number: 19158841.7
(22) Date of filing: 16.04.2013
(51) Int. Cl.: A62B 35/04, F16F 7/00

(54) **ENERGY ABSORBER**
ENERGIEABSORBER
ABSORBEUR D'ÉNERGIE

(30) Priority: 04.05.2012 US 201213463986
(43) Date of publication of application: 31.07.2019
(62) Divisional of application: 13724928.0
(73) Proprietor: D B Industries, LLC, Maplewood, MN55144-1000 (US)
(72) Inventor: Perner, Judd J., St. Paul, MN Minnesota 55133-3427 (US)
(74) Representative: Mathys & Squire

(56) References cited:
- WO-A2-95/01815
- CH-B1- 698 203
- US-B1- 7 392 881
- US-B2- 7 726 350

## Description

### BACKGROUND

To protect workers that have to work at heights, lifelines coupled to safety harnesses donned by a worker are often required. If a fall event occurs, the lifeline (coupled to a support structure) limits the fall of the worker. A worker can be subject to injury even with the use of a lifeline system if a fall distance before the lifeline becomes taut is significant. Energy absorbers have been added to lifeline systems to provide a less abrupt stop when the lifeline becomes taut therein lessening the possibility of injuries. An energy absorber works by absorbing the some kinetic energy of the falling body (i.e. the kinetic energy of the falling worker). Various types of energy absorbers have been implemented in the past such as spring type arrangements and deforming metal arrangements. However, these types of arrangements tend to be bulky and relatively heavy.

For the reasons stated above and for other reasons stated below which will become apparent to those skilled in the art upon reading and understanding the present specification, there is a need in the art for an effective, efficient and compact energy absorber.

CH 698 203 B1 discloses a known energy absorber.

### SUMMARY OF INVENTION

The above-mentioned problems of current systems are addressed by embodiments of the present invention and will be understood by reading and studying the following specification. The following summary is made by way of example and not by way of limitation. It is merely provided to aid the reader in understanding some of the aspects of the invention.

According to the invention, an energy absorber according to claim 1 is provided.

### BRIEF DESCRIPTION OF THE DRAWINGS

The present invention can be more easily understood and further advantages and uses thereof will be more readily apparent, when considered in view of the detailed description and the following figures in which:
Figure 1 is a side view of an energy absorber system of one embodiment of the present invention;
Figure 2 is a side perspective view of the energy absorber system of Figure 1;
Figure 3A is a side view of an energy absorber of one embodiment of the present invention prior to a fall event;
Figure 3B is a side view of an energy absorber of Figure 3A during a fall event; and
Figure 3C is a side view of the energy absorber of Figure 3A after a fall event has occurred.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the claims.

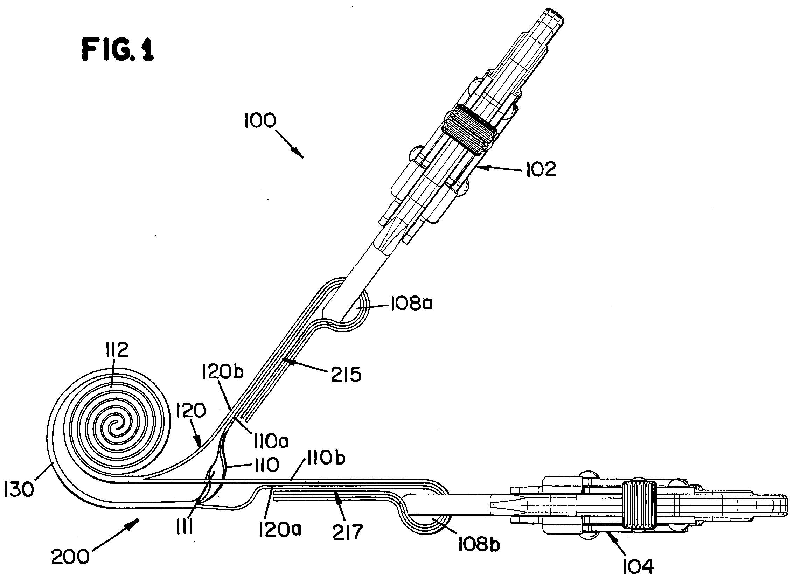

Embodiments of the present invention provide an energy absorber system 100 that is effective and relatively compact. Moreover, Embodiments of the present invention provide an energy absorber without the need for an additional back strap as discussed below. Referring to Figure 1 an embodiment of an energy absorber system 100 is illustrated. The energy absorber system 100 includes a first snap hook 102 (first connector) and a second snap hook 104 (second connector). It will be understood that any type of connector can be used and the present invention is not limited to snap hooks. Coupled between the snap hooks is an energy absorber 200. In use, the energy absorber system 100 is coupled between a safety harness donned by a user and a lanyard by the snap hooks 102 and 104. The lanyard would then in turn be coupled to a support structure. If a fall event occurred, the snap hooks 102 and 104 would be pulled away from each other while the energy absorber 200 absorbs energy as further described below. The energy absorber 200 includes a first strip of webbing 110 and a second strip of webbing 120.

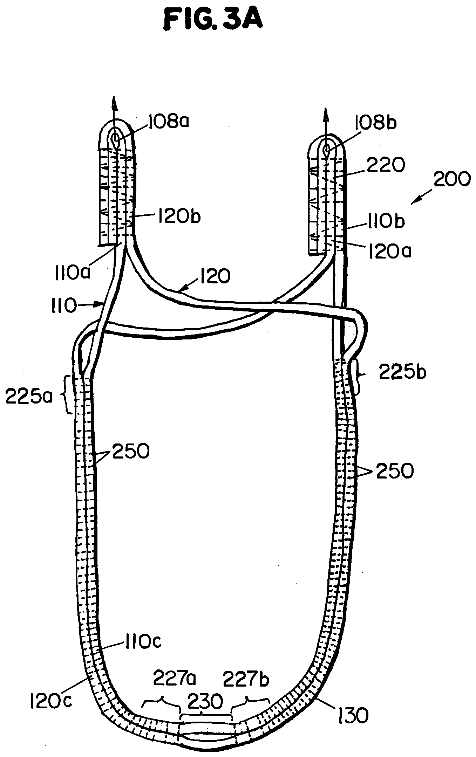

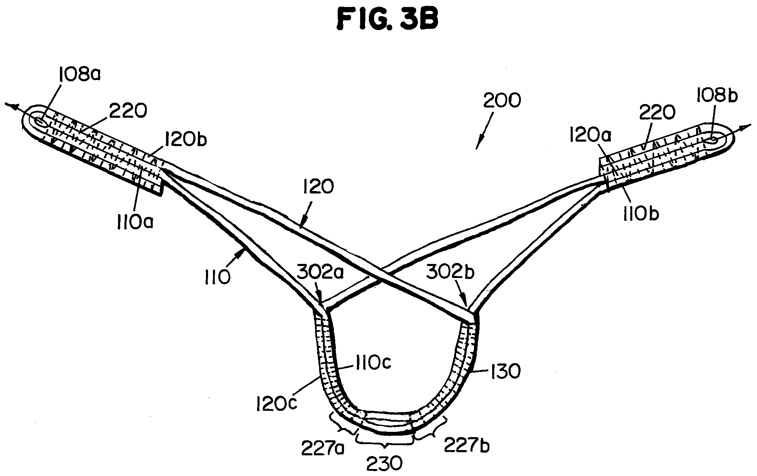

The first strip of webbing 110 and the second strip 120 of webbing are woven together with tear yarns as shown in Figures 3A and 3B. The first strip of webbing 110 and the second strip a webbing 120 can be referred to as tear webbing. An example of tear yarns used to couple the strips of webbing 110 and 120 together are polyester tear yarns 250. An example of a company that manufacturers tear yarns is the Sturges Manufacturing, Inc. Company of Utica, New York. The first strip of webbing 110 and the second strip of webbing 120 in embodiments each include a centrally located mid section 110c and 120c (illustrated in Figure 3A). The centrally located mid sections 110c and 120c of the first and second strips of webbing 110 and 120 are woven together by tear yarns 250 to form a mid portion 130 of the first and second strips of webbing 110 and 120. The tear yarns 250 couple the first and second strips of webbing 110 and 120 together. The first and second strips of webbing 110 and 120 have opposed end portions 110a, 110b, 120a and 102b which are not held together by the tear yarns 250. In one embodiment the first and second strips of webbing 110 and 120 are made from Vectran. In other embodiments, other types of high strength fibers are used for the strips of webbing 110 and 120 such as, but not limited to, Dyneema, Spectra, etc. Typically, lower strength fibers of a different material is used for the tear yarns 250 such as, but not limited to, polyester fibers. The use of dissimilar materials between the strips of webbing 110 and 120 and the tear yarns 250 allows the energy absorbing material to exhibit high strength in a small amount of space. Also, because the fibers in the strips of webbing 110 and 120 are much stronger than the fibers of the tear yarns 250, the fibers in the strips of webbing 110 and 120 are not damaged as the tear yarns 250 are broken.

Referring back to Figure 1, the respective end portions (first webbing first end portion 110a, first webbing second end portion 110b, second webbing first end portion 120a and the second webbing second end portion 120b) of the first and second strips of webbing 110 and 120 are strategically coupled to the associated snap hooks 102 and 104. In particular, the first end portion 110a of the first strip of webbing 110 is coupled to the first snap hook 102. Also coupled to the first snap hook 102 is the second end portion 120b of the second strip of webbing 120. The second end portion 110b of the first strip of webbing 110 and the first end portion 120a of the second strip of webbing 120 are attached to the second snap hook 104. As illustrated in Figure 1, the first strip of webbing 110 in this embodiment includes a twist 111 so that the straps 110 and 102 can be passed by each other. The twist 111 however is not limited to the first strip of webbing 110. Hence, in another embodiment, the second strip of webbing 120 would include the twist 111. As further illustrated in Figure 1, the mid portion 130 of the energy absorber 200 in this embodiment is in a coiled configuration to form a coil of woven webbing 112. This configuration reduces the overall sized of the energy absorber 200 during non-use. In other embodiments, the mid portion 130 is folded instead of coiled during non-use.

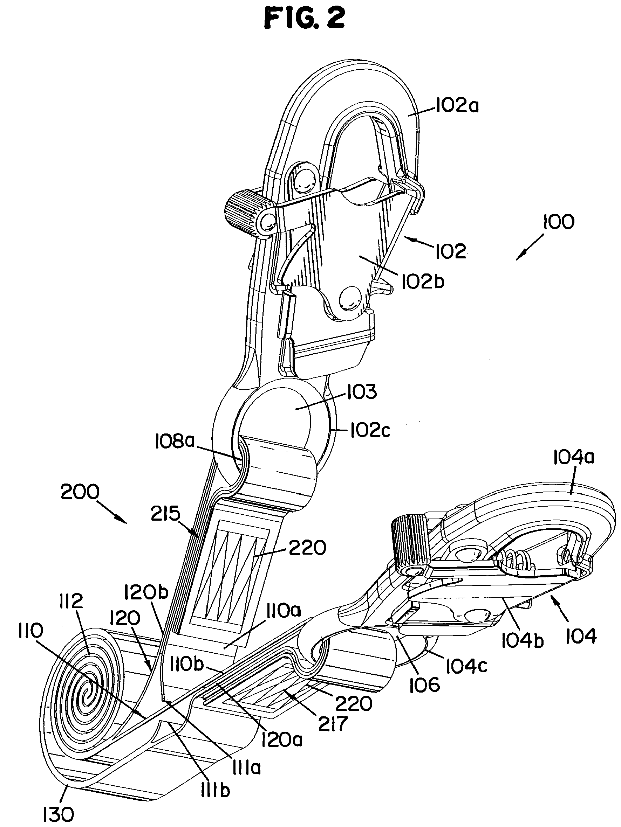

Figure 2 further illustrates the energy absorber system 100. In this Figure, the twist 111 is not illustrated. The first strip of webbing 110 is shown in Figure 2 as being disconnected at ends 111a and 111b for illustration purposes only. It will be understood that the ends 111a and 111b of the webbing are connected in a twist or bend 111 as shown in Figure 1. As further illustrated, the first end portion 110a of the first strip of webbing 110 and the second end portion 120b of the second strip of webbing 120 are passed through a first connection aperture 103 of the first snap hook 102 and folder over on themselves to form a first connector portion 215. They are then attached by attaching stitching 220 to couple the strips of webbing 110 and 120 to the first snap hook 102. The second end portion 110b of the first strip of webbing 110 and the first end portion 120a of the second strip of webbing 120 are passed through a second connection aperture 106 of the second snap hook 104 and folder over on themselves to form a second connector portion 217. They are then attached by attaching stitching 220 that couples the strips of webbing 110 and 120 to the second snap hook 104. As illustrated in Figure 1, the respective folder over portions of the end portions 110a, 120b and 110b and 120a form connector loops 108a and 108b in which the respective connectors 102 and 104 are received.

The snap hooks illustrated in Figure 2 include respective hook body portions 102a and 104a, locking gates 102b and 104b and connection portions 102c and 104c. The connection portions 102c and 104c include the respective connection apertures 103 and 106. As discussed above, although snap hooks 102 and 104 are shown it will be understood that any type of connector can be used that can be coupled to the connector loops 108a and 108b of the strips of webbing 110 and 120. In a typical application as discussed above, the snap hooks 102 and 104 would be used to couple the energy absorber system 100 between a safety harness donned by a worker and a lanyard coupled to a support structure.

Referring to Figure 3A an illustration of the energy absorber 200 of one embodiment in an inactivated state is illustrated. In this illustration, the energy absorber 200 is shown not having its mid portion 130 in a coil for illustration purposes. Figure 3A further shows the arrangement of the strips of webbing 110 and 120. In particular Figure 3A illustrates the positioning of the respective end portions 110a, 120b and 110b, 120a of the strips of webbing 110 and 120 and the positioning of the centrally located mid portion 130. As illustrated, the centrally located mid portion 130 of the webbing strips 110 and 120 are held together by the tear yarns 250. In one embodiment, the mid portion 130 of the webbing strips 110 and 120 includes first and second ramp up transition sections 225a and 225b that are located proximate the respective beginning areas of the mid portion 130. The ramp up transition sections 225a and 225b provide ramp up tear strengths so that when a fall event occurs, the mid portion 130 of the webbing strips 110 and 120 starts pulling apart from each other relatively easily due to a relatively low tear strength and then transitions to a higher desired tear strength. This prevents webbing shock (from going from no tear yarns ((i.e. no tear strength)) to the desired tear strength) from damaging the webbing sections 110 and 120. The transition sections 225a and 225b can be achieved by varying one of the densities of tear yarns, the tear yarn material used and the diameter of the tear yarns.

In the embodiment of the energy absorber 200 of Figure 3A, the mid portion 130 further includes a centrally located unattached section 230. In the centrally unattached section 230, the first and second strips of webbing 110 and 120 are not attached by tear yarns. In one embodiment, the centrally unattached section 230 of the mid portion 130 is approximately 101.6 mm (4 inches). The centrally unattached section 230 prevents the strips of webbing 110 and 120 from binding up (knotting up) on each other. This unintentional binding of the strips of webbing 110 and 120 can occur due to the twist 111 (discussed above) in webbing 110 as the strips of webbing 110 and 120 become separated. This binding of the strips of webbing 110 and 120 can damage the overall strength of the strips of webbing 110 and 120. As discussed above, the strength of the strips of webbing 110 and 120 needs to be maintained since the strips of webbing 110 and 120 double as not only an energy absorber but as back straps. Hence, the centrally unattached section 230 prevents the twist 111 from binding the unattached strips of webbing 110 and 120 together upon conclusion of a fall event.

The mid portion 130 of embodiment of 3A further includes first and second transition ramp down sections 227a and 227b that respectfully lead into the centrally unattached section 230. The first and second transition ramp down sections 227a and 227b transition from the desired tear strength of the mid portion 130 to no tear strength of the centrally unattached section 230. This prevents an instantaneous webbing shock in the strips of webbing 110 and 120 as the strips of webbing 110 and 120 become separated. This webbing shock could damage the overall strength of the strips of webbing 110 and 120. As pointed out above, the overall strength of the strips of webbing 110 and 120 should be preserved since the strips of webbing 110 and 120 are used as back straps. In one embodiment, the first and second transition ramp down sections 227a and 227b are approximately 25.4 mm (1 inch) in length.

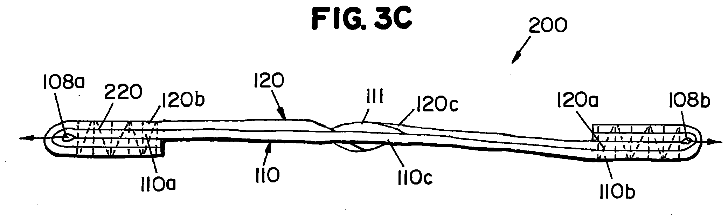

Figure 3B illustrates the energy absorber 200 during a fall event. During a fall event the end portions 110a, 120b and 110b, 120a respectfully are pulled apart from each other as illustrated. As they are pulled apart from each other the tear yarns 250 are broken along separating areas 302a and 302b. Hence in this embodiment, the mid portion 130 of the strips of webbing 110 and 120 are pulled away from each other at two locations 302a and 302b generally simultaneously. The energy absorber 200 continues to absorb energy until the mid-portion 130 of the strips of webbing 110 and 120 are fully separated from each other. This is shown in Figure 3C. As illustrated in Figure 3C, the mid portion 130 of the straps of webbing 110 and 120 are not connected. However, because of the coupling configuration, the strips of webbing 120 and 110 remain coupled between connector loops 108a and 108b. Hence, a traditional back strap required in a typical energy absorbing system is not needed with the embodiments of the present invention. In embodiments, the configuration will retain the strength necessary for tensile requirements post development. For example, in one embodiment, the strips of webbing provide a tensile strength of 3,856 kg (8,500 lbs). Moreover, the dual straps of webbing 110 and 120 provide an additional back strap over a typical system to provide an added safety feature. Hence, even if one of the straps of webbing 110 and 120 fails during a fall event, the other strap will still provide the back strap function which is to retain a connection between a lanyard and a safety harness donned by the worker after the energy absorber is spent.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims.

## Claims

1. An energy absorber (200) comprising:
a first strip of webbing (110) having a first webbing first end portion (110a) and an opposed first webbing second end portion (110b);
a second strip of webbing (120) having a second webbing first end portion (120) and an opposed second webbing second end portion (120b);
a plurality of tear yarns (250) coupling a central section of the first strip of webbing to a central section of the second strip of webbing to form a centrally located mid portion (130) of the first and second strips of webbing in such a manner that the first webbing first end portion of the first strip of webbing is positioned proximate the second webbing first end portion of the second webbing and the first webbing second end portion of the first webbing is positioned proximate the second webbing second end portion of the second webbing, the mid portion of the first and second strips of webbing having a centrally located unattached portion (230) without tear yarns;
a first connector portion (215) configured and arranged to couple the first webbing first end portion (110a) of the first strip of webbing and the second webbing second end portion (120b) of the second webbing to a first connector (102); and
a second connector portion (217) configured and arranged to couple the first webbing second end portion of the first strip of webbing and the second webbing first end portion of the second webbing to a second connector (104);
the energy absorber being configured and arranged such that when the first and second connectors and the respective ends portions of the first and second strips of webbing are pulled away from each other during a fall event, the tear yarns holding the mid portion of the first and second strips of webbing are torn generally simultaneously from opposite ends of the mid portion of the first and second strips therein absorbing energy until the first and second strips of the webbing are separated.

2. The energy absorber of claim 1, wherein the mid portion (130) of the first and second strips of webbing (110, 120) includes a pair of ramp down sections (227a, 227b) having a tear yarn arrangement that produces transition tear strength sections that lead into the centrally located unattached portion (230).

3. The energy absorber of claim 2, wherein the transition tear strength sections transition from a higher tear strength to a lower tear strength as the transition tear strength sections near the centrally located unattached portion (230).

4. The energy absorber of claim 1, wherein at least one of the first strip of webbing (110) and the second strip of webbing (120) includes a twist (111).

5. The energy absorber of claim 1, wherein the mid portion (130) of the first and second strips of webbing (110, 120) further including a pair of ramp up sections (225a, 225b) having a tear yarn arrangement that produces transition tear strength sections proximate opposed ends of the mid portion (130) of the first and second strips of webbing.

6. The energy absorber of claim 5, wherein the transition tear strength sections transition from a lower tear strength to a higher tear strength.

7. A system (100) comprising an energy absorber (200) according to any one of claims 1 to 6 and a lanyard, wherein the energy absorber is connected to the lanyard.

8. The system (100) according to claim 7, wherein the first connector (102) of the energy absorber (200) is coupled to the lanyard.

9. The system (100) according to claim 7 or 8, wherein the system further comprises a safety harness, and the energy absorber (200) is connected between the lanyard and the safety harness.

10. The system (100) according to claim 9, wherein the second connector (104) of the energy absorber (200) is coupled to the safety harness.

11. A kit comprising an energy absorber (200) according to any one of claims 1 to 6, a lanyard and a safety harness.

12. Use of an energy absorber (200) according to any one of claims 1 to 6 to absorb energy during a fall event of a user donning a safety harness, wherein the energy absorber is connected between a lanyard and the safety harness.

13. A method of absorbing energy during a fall event of a user donning a safety harness, the method comprising
providing an energy absorber (200) according to any one of claims 1 to 6,
connecting the energy absorber between a lanyard and the safety harness, and
wherein during the fall event:
the coupled first end portion (110a) of the first strip of webbing (110) and second end portion (120b) of the second webbing (120) pulls apart from the coupled second end portion (110b) of the first strip of webbing (110) and first end portion (120a) of the second webbing (120);
and as the respective end portions pull apart from each other, the tear yarns (250) are broken along separating areas, such that the mid portion (130) of the strips of webbing are pulled away from each other at two locations (302a, 302b) generally simultaneously, until the mid-portion of the strips of webbing are fully separated from each other.

14. A method according to claim 13, wherein step of connecting comprises coupling the first connector (102) of the energy absorber (200) to the lanyard, coupling the second connector (104) of the energy absorber to the safety harness, and coupling the lanyard to a support structure.

15. A method according to claim 13 or 14, wherein after the mid-portion (130) of the strips of webbing (110, 120) are fully separated from each other and the energy absorber (200) is spent, the first and/or second strips of webbing retain the connection between the lanyard and the safety harness.

## Patentansprüche

1. Ein Energieabsorber (200), umfassend:
einen ersten Gewebebandstreifen (110) mit einem ersten Endabschnitt (110a) des ersten Gewebebands und einem gegenüberliegenden zweiten Endabschnitt (110b) des ersten Gewebebands;
einen zweiten Gewebebandstreifen (120) mit einem ersten Endabschnitt (120) des zweiten Gewebebands und einem gegenüberliegenden zweiten Endabschnitt (120b) des zweiten Gewebebands;
eine Vielzahl von Reißfäden (250), die einen zentralen Abschnitt des ersten Gewebebandstreifens mit einem zentralen Abschnitt des zweiten Gewebebandstreifens verbinden, um einen zentral angeordneten Mittelabschnitt (130) des ersten und des zweiten Gewebebandstreifens derart zu bilden, dass der erste Endabschnitt des ersten Gewebebands des ersten Gewebebandstreifens in der Nähe des ersten Endabschnitts des zweiten Gewebebands des zweiten Gewebebands positioniert ist und der zweite Endabschnitt des ersten Gewebebands des ersten Gewebebands in der Nähe des zweiten Endabschnitts des zweiten Gewebebands des zweiten Gewebebands positioniert ist, wobei der Mittelabschnitt des ersten und des zweiten Gewebebandstreifens einen zentral angeordneten unbefestigten Abschnitt (230) ohne Reißfäden aufweist;
einen ersten Verbinderabschnitt (215), der dazu ausgebildet und angeordnet ist, den ersten Endabschnitt (110a) des ersten Gewebebands des ersten Gewebebandstreifens und den zweiten Endabschnitt (120b) des zweiten Gewebebands des zweiten Gewebebandstreifens an einen ersten Verbinder (102) zu koppeln; und
einen zweiten Verbinderabschnitt (217), der dazu ausgebildet und angeordnet ist, den zweiten Endabschnitt des ersten Gewebebands des ersten Gewebebandstreifens und den ersten Endabschnitt des zweiten Gewebebands des zweiten Gewebebands an einen zweiten Verbinder (104) zu koppeln;
wobei der Energieabsorber derart ausgebildet und angeordnet ist, dass, wenn der erste und der zweite Verbinder und die jeweiligen Endabschnitte des ersten und des zweiten Gewebebandstreifens während eines Sturzereignisses voneinander weg gezogen werden, die Reißfäden, die den Mittelabschnitt des ersten und des zweiten Gewebebandstreifens halten, allgemein gleichzeitig von gegenüberliegenden Enden des Mittelabschnitts des ersten und des zweiten Streifens darin abgerissen werden, wobei Energie darin absorbiert wird, bis der erste und der zweite Streifen des Gewebebands getrennt werden.

2. Der Energieabsorber nach Anspruch 1, wobei der Mittelabschnitt (130) des ersten und des zweiten Gewebebandstreifens (110, 120) ein Paar Abnahmeabschnitte (227a, 227b) mit einer Übergangsreißfestigkeitsabschnitte erzeugenden Reißfadenanordnung aufweist, das in den zentral angeordneten unbefestigten Abschnitt (230) führt.

3. Der Energieabsorber nach Anspruch 2, wobei die Übergangsreißfestigkeitsabschnitte von einer höheren Reißfestigkeit zu einer niedrigeren Reißfestigkeit übergehen, während sich die Übergangsreißfestigkeitsabschnitte dem zentral angeordneten unbefestigten Abschnitt (230) nähern.

4. Der Energieabsorber nach Anspruch 1, wobei der erste Gewebebandstreifen (110) und der zweite Gewebebandstreifen (120) eine Verdrehung (111) aufweisen.

5. Der Energieabsorber nach Anspruch 1, wobei der Mittelteil des ersten und des zweiten Gewebebandstreifens (110, 120) ferner ein Paar Anstiegsabschnitte (225a, 225b) mit einer Übergangsreißfestigkeitsabschnitte erzeugenden Reißfadenanordnung nahe gegenüberliegenden Enden des Mittelabschnitts (130) des ersten und des zweiten Gewebebandstreifens aufweist.

6. Der Energieabsorber nach Anspruch 5, wobei die Übergangsreißfestigkeitsabschnitte von einer niedrigeren Reißfestigkeit zu einer höheren Reißfestigkeit übergehen.

7. Ein System (100), umfassend einen Energieabsorber (200) nach einem der Ansprüche 1 bis 6 und eine Schnur, wobei der Energieabsorber mit der Schnur verbunden ist.

8. Das System (100) nach Anspruch 7, wobei der erste Verbinder (102) des Energieabsorbers (200) an die Schnur gekoppelt ist.

9. Das System (100) nach Anspruch 7 oder 8, wobei das System ferner ein Sicherheitsgeschirr umfasst und der Energieabsorber (200) zwischen der Schnur und dem Sicherheitsgeschirr verbunden ist.

10. Das System (100) nach Anspruch 9, wobei der zweite Verbinder (104) des Energieabsorbers (200) an das Sicherheitsgeschirr gekoppelt ist.

11. Ein Kit, umfassend einen Energieabsorber (200) nach einem der Ansprüche 1 bis 6, eine Schnur und ein Sicherheitsgeschirr.

12. Verwendung eines Energieabsorbers (200) nach einem der Ansprüche 1 bis 6 zum Absorbieren von Energie während eines Sturzereignisses eines Benutzers, der ein Sicherheitsgeschirr trägt, wobei der Energieabsorber zwischen einer Schnur und dem Sicherheitsgeschirr verbunden ist.

13. Ein Verfahren zum Absorbieren von Energie während eines Sturzereignisses eines Benutzers, der ein Sicherheitsgeschirr trägt, wobei das Verfahren Folgendes umfasst:
Bereitstellen eines Energieabsorbers (200) nach einem der Ansprüche 1 bis 6,
Verbinden des Energieabsorbers zwischen einer Schnur und dem Sicherheitsgeschirr, und wobei während des Sturzereignisses:
der gekoppelte erste Endabschnitt (110a) des ersten Gewebebands (110) und zweite Endabschnitt (120b) des zweiten Gewebebands (120) von dem gekoppelten zweiten Endabschnitt (110b) des ersten Gewebebandstreifens (110) und ersten Endabschnitt (120a) des zweiten Gewebebands (120) weg zieht;
und während die jeweiligen Endabschnitte voneinander weg gezogen werden, die Reißfäden (250) entlang Trennbereichen gebrochen werden, derart, dass der Mittelabschnitt (130) der Gewebebandstreifen an zwei Stellen (302a, 302b) allgemein gleichzeitig voneinander weg gezogen wird, bis der Mittelabschnitt der Gewebebandstreifen vollständig voneinander getrennt ist.

14. Ein Verfahren nach Anspruch 13, wobei der Schritt des Verbindens das Koppeln des ersten Verbinders (102) des Energieabsorbers (200) an die Schnur, das Koppeln des zweiten Verbinders (104) des Energieabsorbers an das Sicherheitsgeschirr und das Koppeln der Schnur an eine Stützstruktur umfasst.

15. Ein Verfahren nach Anspruch 13 oder 14, wobei, nachdem der Mittelabschnitt (130) der Gewebebandstreifen (110, 120) vollständig voneinander getrennt wurde und der Energieabsorber (200) verbraucht wurde, der erste und/oder der zweite Gewebebandstreifen die Verbindung zwischen der Schnur und dem Sicherheitsgeschirr beibehalten.

## Revendications

1. Absorbeur d'énergie (200) comprenant :
une première bande de sangle (110) ayant une première partie d'extrémité de première sangle (110a) et une deuxième partie d'extrémité de première sangle opposée (110b) ;
une deuxième bande de sangle (120) ayant une première partie d'extrémité de deuxième sangle (120) et une deuxième partie d'extrémité de deuxième sangle opposée (120b) ;
une pluralité de fils de déchirure (250) couplant une section centrale de la première bande de sangle à une section centrale de la deuxième bande de sangle pour former une partie médiane située en position centrale (130) des première et deuxième bandes de sangle d'une manière telle que la première partie d'extrémité de première sangle de la première bande de sangle est positionnée à proximité de la première partie d'extrémité de deuxième sangle de la deuxième sangle et la deuxième partie d'extrémité de première sangle de la première sangle est positionnée à proximité de la deuxième partie d'extrémité de deuxième sangle de la deuxième sangle, la partie médiane des première et deuxième bandes de sangle ayant une partie libre située en position centrale (230) dépourvue de fils de déchirure ;
une première partie de connecteur (215) configurée et agencée pour coupler la première partie d'extrémité de première sangle (110a) de la première bande de sangle et la deuxième partie d'extrémité de deuxième sangle (120b) de la deuxième sangle à un premier connecteur (102) ; et
une deuxième partie de connecteur (217) configurée et agencée pour coupler la deuxième partie d'extrémité de première sangle de la première bande de sangle et la première partie d'extrémité de deuxième sangle de la deuxième sangle à un deuxième connecteur (104) ;
l'absorbeur d'énergie étant configuré et agencé de telle sorte que lorsque les premier et deuxième connecteurs et les parties d'extrémités respectives des première et deuxième bandes de sangle sont détachés l'un de l'autre pendant un événement de chute, les fils de déchirure maintenant la partie médiane des première et deuxième bandes de sangle sont déchirés de façon généralement simultanée à partir d'extrémités opposées de la partie médiane des première et deuxième bandes en son sein absorbant de l'énergie jusqu'à ce que les première et deuxième bandes de la sangle soient séparées.

2. Absorbeur d'énergie selon la revendication 1, dans lequel la partie médiane (130) des première et deuxième bandes de sangle (110, 120) inclut une paire de sections à diminution progressive (227a, 227b) ayant un agencement de fils de déchirure qui produit des sections de résistance au déchirement de transition qui mènent dans la partie libre située en position centrale (230).

3. Absorbeur d'énergie selon la revendication 2, dans lequel les sections de résistance au déchirement de transition passent d'une résistance au déchirement plus élevée à une résistance au déchirement plus basse à mesure que les sections de résistance au déchirement de transition se rapprochent de la partie libre située en position centrale (230).

4. Absorbeur d'énergie selon la revendication 1, dans lequel au moins l'une parmi la première bande de sangle (110) et la deuxième bande de sangle (120) inclut une torsion (111).

5. Absorbeur d'énergie selon la revendication 1, dans lequel la partie médiane (130) des première et deuxième bandes de sangle (110, 120) inclut en outre une paire de sections à augmentation progressive (225a, 225b) ayant un agencement de fils de déchirure qui produit des sections de résistance au déchirement de transition à proximité d'extrémités opposées de la partie médiane (130) des première et deuxième bandes de sangle.

6. Absorbeur d'énergie selon la revendication 5, dans lequel les sections de résistance au déchirement de transition passent d'une résistance au déchirement plus basse à une résistance au déchirement plus élevée.

7. Système (100) comprenant un absorbeur d'énergie (200) selon l'une quelconque des revendications 1 à 6 et un cordon, dans lequel l'absorbeur d'énergie est connecté au cordon.

8. Système (100) selon la revendication 7, dans lequel le premier connecteur (102) de l'absorbeur d'énergie (200) est couplé au cordon.

9. Système (100) selon la revendication 7 ou 8, dans lequel le système comprend en outre un harnais de sécurité, et l'absorbeur d'énergie (200) est connecté entre le cordon et le harnais de sécurité.

10. Système (100) selon la revendication 9, dans lequel le deuxième connecteur (104) de l'absorbeur d'énergie (200) est couplé au harnais de sécurité.

11. Trousse comprenant un absorbeur d'énergie (200) selon l'une quelconque des revendications 1 à 6, un cordon et un harnais de sécurité.

12. Utilisation d'un absorbeur d'énergie (200) selon l'une quelconque des revendications 1 à 6 pour absorber de l'énergie pendant un événement de chute d'un utilisateur enfilant un harnais de sécurité, dans lequel l'absorbeur d'énergie est connecté entre un cordon et le harnais de sécurité.

13. Procédé d'absorption d'énergie pendant un événement de chute d'un utilisateur enfilant un harnais de sécurité, le procédé comprenant
la fourniture d'un absorbeur d'énergie (200) selon l'une quelconque des revendications 1 à 6, la connexion de l'absorbeur d'énergie entre un cordon et le harnais de sécurité, et dans lequel pendant l'événement de chute :
la première partie d'extrémité couplée (110a) de la première bande de sangle (110) et la deuxième partie d'extrémité (120b) de la deuxième sangle (120) se détachent de la deuxième partie d'extrémité couplée (110b) de la première bande de sangle (110) et de la première partie d'extrémité (120a) de la deuxième sangle (120) ;
et à mesure que les parties d'extrémité respectives se détachent l'une de l'autre, les fils de déchirure (250) sont rompus le long de zones de séparation, de telle sorte que les parties médianes (130) des bandes de sangle se détachent l'une de l'autre au niveau de deux emplacements (302a, 302b) de façon généralement simultanée, jusqu'à ce que les parties médianes des bandes de sangle soient complètement séparées l'une de l'autre.

14. Procédé selon la revendication 13, dans lequel l'étape de connexion comprend le couplage du premier connecteur (102) de l'absorbeur d'énergie (200) au cordon, le couplage du deuxième connecteur (104) de l'absorbeur d'énergie au harnais de sécurité, et le couplage du cordon à une structure de support.

15. Procédé selon la revendication 13 ou 14, dans lequel après que les parties médianes (130) des bandes de sangle (110, 120) sont complètement séparées l'une de l'autre et que l'absorbeur d'énergie (200) est utilisé, les première et/ou deuxième bandes de sangle maintiennent la connexion entre le cordon et le harnais de sécurité.
